# FASCICULE DE BREVET EUROPEEN

(11) **EP 3 913 571 B1**
(45) Date de publication et mention de la délivrance du brevet: **26.08.2026**
(21) Numéro de dépôt: 21174197.0
(22) Date de dépôt: 17.05.2021
(51) Int. Cl.: G06T 3/14

(54) **PROCÉDÉ ET DISPOSITIF DE LOCALISATION D'UN ENGIN**
VERFAHREN UND VORRICHTUNG ZUR LOKALISIERUNG EINES GERÄTS
METHOD AND DEVICE FOR LOCATING A VEHICLE

(30) Priorité: 20.05.2020 FR 2005282
(43) Date de publication de la demande: 24.11.2021
(73) Titulaire: Airbus Defence and Space SAS, 31402 Toulouse Cedex 4 (FR); Airbus SAS, 31700 Blagnac (FR)
(72) Inventeur: GLINER, Loris, 31300 TOULOUSE (FR); LEFEZ, Romain, 31402 TOULOUSE (FR); LE BESNERAIS, Guy, 31055 TOULOUSE (FR)
(74) Mandataire: Gevers & Orès

(56) Documents cités:
- CAROL MARTÍNEZ ET AL: "A Hierarchical Tracking Strategy for Vision-Based Applications On-Board UAVs", JOURNAL OF INTELLIGENT AND ROBOTIC SYSTEMS., vol. 72, no. 3-4, 13 March 2013 (2013-03-13), NL, pages 517 - 539, XP055764340, ISSN: 0921-0296, DOI: 10.1007/s10846-013-9814-x
- DONG-GYU SIM ET AL: "Integrated position estimation using aerial image sequences", IEEE TRANSACTIONS ON PATTERN ANALYSIS AND MACHINE INTELLIGENCE, IEEE COMPUTER SOCIETY, USA, vol. 24, no. 1, 1 January 2002 (2002-01-01), pages 1 - 18, XP011094131, ISSN: 0162-8828, DOI: 10.1109/34.982881
- R.C. HARDIE ET AL: "Joint MAP registration and high-resolution image estimation using a sequence of undersampled images", IEEE TRANSACTIONS ON IMAGE PROCESSING, vol. 6, no. 12, 1 December 1997 (1997-12-01), US, pages 1621 - 1633, XP055764359, ISSN: 1057-7149, DOI: 10.1109/83.650116
- AMAURY DAME ET AL: "Accurate real-time tracking using mutual information", MIXED AND AUGMENTED REALITY (ISMAR), 2010 9TH IEEE INTERNATIONAL SYMPOSIUM ON, IEEE, PISCATAWAY, NJ, USA, 13 October 2010 (2010-10-13), pages 47 - 56, XP032291029, ISBN: 978-1-4244-9343-2, DOI: 10.1109/ISMAR.2010.5643550
- KANELLAKIS CHRISTOFOROS ET AL: "Survey on Computer Vision for UAVs: Current Developments and Trends", JOURNAL OF INTELLIGENT AND ROBOTIC SYSTEMS, KLUWER DORDRECHT, NL, vol. 87, no. 1, 27 January 2017 (2017-01-27), pages 141 - 168, XP036247008, ISSN: 0921-0296, [retrieved on 20170127], DOI: 10.1007/S10846-017-0483-Z
- GIANPAOLO CONTE ET AL: "Vision-Based Unmanned Aerial Vehicle Navigation Using Geo-Referenced Information", EURASIP JOURNAL ON ADVANCES IN SIGNAL PROCESSING, vol. 2009, no. 1, 7 June 2009 (2009-06-07), XP055691547, DOI: 10.1155/2009/387308

## Description

### DOMAINE TECHNIQUE

La présente invention concerne un procédé et un dispositif de localisation d'un engin, notamment un aéronef ou un engin spatial. Il peut s'agir d'un engin se déplaçant sur un domaine aéroportuaire. Il peut encore s'agir d'un engin en orbite autour d'un corps céleste, en approche d'un corps céleste ou se déplaçant sur ledit corps céleste.

### ÉTAT DE LA TECHNIQUE

La localisation d'un engin à la surface de la Terre se fait notamment à l'aide d'un système de navigation par satellite GNSS (« Global Navigation Satellite System », en anglais) qui comprend une constellation de satellites gravitant autour de la Terre, ainsi qu'un récepteur embarqué sur l'engin à localiser. Le récepteur communique avec les satellites.

Plusieurs systèmes de navigation GNSS coexistent à ce jour, parmi lesquels figurent notamment l'européen Galileo, l'américain GPS (« Global Positioning System », en anglais), le russe GLONASS (« Global'naya Navigatsionnaya Sputnikovaya Sistema », en russe), et le système chinois baptisé « BeiDou Navigation Satellite System ».

Bien que ces systèmes GNSS offrent une couverture globale de la surface de la Terre, des difficultés sont parfois observées dans leur fonctionnement. On peut citer par exemple des coupures plus ou moins longues dans la transmission de signaux entre satellites et récepteurs. En cas de telles coupures, les déplacements de l'engin à localiser peuvent être perturbés. On peut citer également des brouillages dont les systèmes GNSS peuvent être l'objet et qui peuvent être un obstacle à la certification d'engins dits autonomes.

Ainsi, dans une démarche visant à rendre le plus autonomes possible des engins roulants tels que aéronefs, la dépendance à la technologie de localisation par satellite est un obstacle qu'il est nécessaire de franchir.

Par ailleurs, à l'ère de la conquête spatiale marquée par un nombre croissant de missions d'exploration de corps célestes (planètes, comètes, etc.) à l'aide d'engins spatiaux (rovers), la localisation de ces engins sur ces corps célestes devient une question cruciale d'autant plus qu'il n'existe à ce jour aucun système de navigation éprouvé pour ce type d'engins.

Par ailleurs, on connaît :
- par un article de C. Martinez et al, intitulé « A hierarchical tracking strategy for vision based applications onboard UAVs », publié dans « Journal of intelligent and robotic systems » le 13 mars 2013, une stratégie de suivi d'un objet planaire destinée à être utilisée depuis un engin volant sans pilote ; et
- par un article de G. Conte et P. Doherty, intitulé « Vision-Based Unmanned Aerial Vehicle Navigation Using Geo-Referenced Information », publié dans « Journal on Advances in Signal Processing » le 7 juin 2009, un système de navigation utilisant une caméra pour réaliser la navigation d'un engin aérien sans utiliser le système GPS.

### EXPOSÉ DE L'INVENTION

La présente invention a pour objet d'offrir une solution de localisation alternative au système de navigation par satellite, et propose à cet effet un dispositif de localisation d'un engin, notamment un aéronef et/ou un engin spatial.

Selon l'invention, le dispositif comprend une base de données comprenant une cartographe d'un terrain, une unité d'acquisition configurée pour acquérir une image numérique dudit terrain, ainsi qu'une unité de traitement configurée pour recevoir de ladite unité d'acquisition ladite image numérique et déterminer une similitude entre ladite cartographie numérique et ladite image numérique, de sorte à déduire une position dudit engin à partir d'un résultat de ladite similitude.

Ainsi, le dispositif s'appuie uniquement sur des données existantes (cartographie) et sur des données acquises (images) par l'engin à localiser. Le dispositif permet par conséquent de s'affranchir de données instantanées fournies par satellite, permettant de la sorte de positionner un aéronef sans faire appel à une telle technologie, et ouvrant la voie à la possibilité de localiser un engin spatial en déplacement à proximité ou sur la surface d'un corps céleste.

De façon avantageuse, l'unité d'acquisition et l'unité de traitement sont embarquées sur ledit engin.

De façon encore avantageuse, l'unité de traitement est configurée pour télécharger au moins partiellement la cartographie numérique au niveau de l'engin.

L'unité de traitement est de préférence configurée pour sélectionner une zone d'intérêt sur la cartographie numérique. Ladite zone d'intérêt correspond à un domaine restreint de localisation probable de l'engin sur le terrain.

De façon avantageuse, l'unité d'acquisition comprend au moins une caméra configurée pour obtenir une version préliminaire de l'image numérique.

De façon avantageuse, l'unité d'acquisition est configurée pour transformer par homographie ladite version préliminaire en une version intermédiaire. Cette version intermédiaire correspond à une projection de ladite version préliminaire sur un plan de la cartographie numérique.

De façon avantageuse, l'unité d'acquisition est configurée pour augmenter et/ou inverser, par traitement d'image, un contraste de ladite version intermédiaire pour obtenir une version finale de l'image numérique.

La version intermédiaire et/ou la version finale de l'image numérique sont destinées à être utilisées pour déterminer ladite similitude.

Selon un mode de réalisation en complément ou non du mode précédent, l'unité de traitement est configurée pour augmenter, par traitement d'image, un contraste d'un premier format de la cartographie numérique pour obtenir un format final de ladite cartographie. Ledit format final est utilisé pour déterminer ladite similitude.

Selon un mode de réalisation en complément ou non des modes précédents, l'unité de traitement est configurée pour identifier au moins un premier pixel de l'image numérique avec au moins un deuxième pixel de la cartographie numérique.

Ledit premier pixel correspond à la position recherchée de l'engin. Ledit deuxième pixel délivre des coordonnées associées à ladite position.

Selon un mode de réalisation en complément ou non des modes précédents, le dispositif comprend une unité de validation configurée pour valider une première valeur de ladite position par une comparaison avec une deuxième valeur de ladite position. En particulier, ladite deuxième valeur est fournie par un système de navigation inertielle.

La présente invention concerne également un procédé de localisation d'un engin, notamment un aéronef et/ou un engin spatial.

Selon l'invention, le procédé exploite une base de données comprenant une cartographie numérique d'un terrain, ledit procédé comprenant les étapes suivantes :
- une étape, dite d'acquisition, mise en œuvre par une unité d'acquisition, consistant à acquérir une image numérique du terrain,
- une étape, dite de comparaison, mise en œuvre par une unité de traitement, consistant à déterminer une similitude entre la cartographie numérique du terrain et l'image numérique dudit terrain,
- une étape, dite de détermination, mise en œuvre par l'unité de traitement, consistant à déterminer une position dudit engin à partir d'un résultat de ladite étape de comparaison.

De façon avantageuse, l'unité d'acquisition et/ou l'unité de traitement sont embarquées sur l'engin à localiser. Un tel choix confère audit engin une plus grande autonomie pour sa localisation, et assure au procédé selon l'invention de meilleures performances notamment en matière de vitesse d'exécution.

Avantageusement, l'étape de comparaison comprend une sous-étape de téléchargement au moins partiel de la cartographie numérique au niveau de l'engin.

En outre, l'étape de comparaison comprend de préférence une sous-étape consistant à sélectionner une zone d'intérêt sur la cartographie numérique, ladite zone d'intérêt correspondant à un domaine restreint de localisation probable de l'engin sur le terrain.

De façon avantageuse, l'étape d'acquisition comprend une sous-étape de capture d'une version préliminaire de l'image numérique à l'aide d'une caméra de ladite unité d'acquisition.

L'étape d'acquisition comprend également une sous-étape d'homographie consistant à transformer la version préliminaire de l'image numérique en une version intermédiaire, ladite version intermédiaire correspondant à une projection de ladite version préliminaire sur un plan de la cartographie numérique.

L'étape d'acquisition comprend de façon encore plus avantageuse une sous-étape de traitement d'image consistant à augmenter et/ou inverser un contraste de la version intermédiaire de l'image numérique pour obtenir une version finale de ladite image.

La version intermédiaire et/ou la version finale de l'image numérique sont utilisées pour déterminer ladite similitude.

Selon un mode de réalisation en complément ou non du mode préféré, l'étape de comparaison comprend une sous-étape de traitement d'image consistant à augmenter un contraste d'un format initial de la cartographie numérique pour obtenir un format final de ladite cartographie. Ledit format final est utilisé pour déterminer ladite similitude.

Selon un mode de réalisation en complément ou non du mode précédent, l'étape de comparaison comprend une sous-étape d'identification d'au moins un premier pixel de l'image numérique avec au moins un deuxième pixel de la cartographie numérique. Ledit premier pixel correspond à ladite position. Ledit deuxième pixel délivre des coordonnées associées à ladite position.

Selon un mode de réalisation, en complément ou non des modes précédents, le procédé comprend une étape de validation d'une première valeur de ladite position par une comparaison avec une deuxième valeur de ladite position, ladite deuxième valeur étant fournie par un système de navigation inertielle.

La présente invention concerne, en outre, un engin, en particulier un aéronef ou engin spatial, qui est équipé d'un dispositif tel que celui précité.

### BRÈVE DESCRIPTION DES FIGURES

Les figures annexées feront bien comprendre comment l'invention peut être réalisée. Sur ces figures, des références identiques désignent des éléments semblables.
La figure 1 est le schéma synoptique d'un mode de réalisation particulier d'un dispositif de localisation d'un engin selon l'invention.
La figure 2 illustre schématiquement des étapes d'un procédé de localisation selon l'invention, mis en œuvre par le dispositif de la figure 1.
La figure 3 illustre deux positions successives d'un engin à localiser suivant le procédé de la figure 2.

### DESCRIPTION DÉTAILLÉE

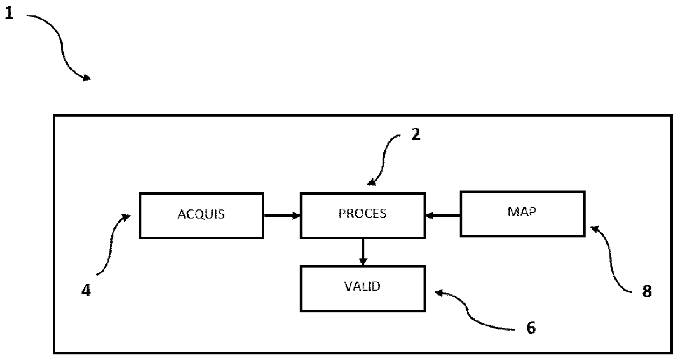

Le dispositif 1 représenté schématiquement sur la figure 1 est un dispositif de localisation d'un engin.

Le dispositif 1 comprend une base de données 8 intégrant une cartographie numérique MAP d'un terrain, une unité d'acquisition 4 configurée pour acquérir une image numérique dudit terrain, ainsi qu'une unité de traitement 2 configurée pour recevoir de ladite unité d'acquisition 4 ladite cartographie numérique MAP et déterminer une similitude entre ladite cartographie numérique MAP et ladite image numérique IMG. De la sorte, l'unité de traitement 2 permet de déduire une position POS de l'engin à partir d'un résultat de ladite similitude.

Par terrain, on entend, par exemple, un domaine aéroportuaire sur lequel on cherche à localiser un aéronef. Sur un tel domaine aéroportuaire, on peut distinguer une première portion de sol, recouverte de macadam, ainsi qu'une deuxième portion de sol recouverte d'herbe, de sable ou de terre, délimitant ladite première portion. En particulier, la première portion est destinée au roulage d'aéronefs et présente des marquages au sol séparant différents éléments tels que des pistes d'atterrissage et de décollage, des aires de parking ou de manœuvre, des voies de circulation, etc.

Le terme « terrain » peut également désigner la surface d'un corps céleste sur laquelle on cherche à localiser un engin spatial ou une sonde spatiale. Une telle surface comprend des éléments de relief tels que plaines, collines, montagnes, cuvettes, etc.

Par ailleurs, par cartographie, on entend une photographie, notamment aérienne, d'un domaine aéroportuaire, reprenant différents tracés (pistes, voies, etc.) dudit domaine aéroportuaire. Le terme cartographie peut également faire référence à un modèle de terrain (« Digital Terrain Model » DTM, en anglais) associé à la surface d'un corps céleste et reprenant différents éléments de relief (plaines, cuvettes, etc.) de ladite surface.

Un modèle de terrain existe aujourd'hui par exemple pour la Terre ainsi que pour la planète Mars. Les versions de photographies ou modèles de terrain utilisés selon l'invention sont numériques et/ou numérisées.

De façon avantageuse, l'unité d'acquisition 4 et/ou l'unité de traitement 2 sont embarquées sur l'engin à localiser.

De façon avantageuse, l'unité de traitement 2 est configurée pour télécharger au moins partiellement la cartographie numérique MAP au niveau de l'engin, en particulier dans ladite base de données 8.

A titre d'exemple, une cartographie complète de la zone, région ou planète relative au trajet à parcourir par l'engin est téléchargée dans une mémoire localisée dans un serveur situé dans l'engin, ladite mémoire contenant ladite base de données 8. En variante, ladite cartographie est téléchargée au fur et à mesure du trajet depuis un serveur distant.

Lorsqu'on cherche à localiser un engin sur un terrain, il peut être connu à l'avance et/ou déterminé par calcul à partir de différentes données une zone restreinte dudit terrain, dite zone d'intérêt ROI (« Region Of Interest », en anglais), dans laquelle il existe une forte probabilité de présence dudit engin. C'est le cas notamment d'un aéronef positionné sur une portion connue (par exemple une piste, une aire de parking, etc.) d'un domaine aéroportuaire.

Pour de tels cas, l'unité de traitement 2 est avantageusement configurée pour sélectionner sur la cartographie MAP du terrain une partie correspondant à une zone d'intérêt ROI. Cette partie de la cartographie MAP peut alors servir de base de comparaison avec l'image IMG du terrain prise par l'unité d'acquisition 4. L'utilisation d'une partie de la cartographie MAP plutôt que de l'ensemble de ladite cartographie permet ainsi d'accélérer la localisation.

De façon avantageuse, l'unité d'acquisition 4 comporte au moins une caméra. Dans le cas d'un aéronef, l'invention s'appuie avantageusement en grande partie sur des caméras existantes, notamment des caméras visant une scène à l'avant de l'aéronef. Toutefois, il peut être nécessaire d'intégrer de nouvelles caméras, notamment des caméras visant une scène sous l'aéronef.

Grâce à ladite ou auxdites caméras, l'unité d'acquisition 4 fournit dans un premier temps une version préliminaire PV de l'image IMG du terrain. Cette version préliminaire PV est capturée sous un certain angle de vue du terrain, par exemple la scène à l'avant de l'aéronef, différent d'un angle de vue sous lequel est réalisée la cartographie MAP.

Afin de permettre une comparaison entre la version préliminaire PV de l'image IMG et la cartographie MAP, l'unité d'acquisition 4 est configurée pour transformer par homographie ladite version préliminaire PV en une version intermédiaire IV. Cette version intermédiaire IV correspond à une projection de la version préliminaire PV sur un plan de la cartographie MAP.

La version intermédiaire IV ainsi obtenue peut nécessiter un traitement d'image supplémentaire afin de répondre pleinement aux besoins de comparaison avec la cartographie MAP. Pour cela, l'unité d'acquisition 4 est configurée pour augmenter un contraste de ladite version intermédiaire IV permettant de générer une version finale FV. En particulier, cette augmentation de contraste peut se faire à l'aide d'une technique de traitement d'image dite d'égalisation d'histogramme adaptatif avec limitation de contraste CLAHE (« Contrast Limited Adaptative Histogram Equalization », en anglais).

De la même manière, la cartographie MAP peut nécessiter un traitement d'image préalable en vue de sa comparaison avec l'image IMG. A cette fin, l'unité de traitement 2 est configurée pour augmenter un contraste d'un premier format VERS1 de ladite cartographie MAP afin d'obtenir un format final VERS2 de ladite cartographie MAP. Ce format final VERS2 est adapté à l'opération de comparaison avec l'image IMG.

La comparaison entre l'image IMG et la cartographie MAP peut se faire par superposition de ladite image sur ladite cartographie, et plus précisément par superposition des pixels de ladite image sur des pixels de ladite cartographie.

L'unité de traitement 2 est configurée pour assurer une telle fonction. Plus spécifiquement, l'unité de traitement 2 permet d'identifier un pixel de l'image IMG, dit premier pixel, avec un pixel de la cartographie MAP, dit deuxième pixel. La position POS recherchée sur le terrain TER correspond ainsi au premier pixel, et le deuxième pixel délivre des coordonnées (X, Y) associées à ladite position POS. Ces coordonnées (X, Y) correspondent à une latitude et une longitude de l'engin.

Selon un autre mode de réalisation, le dispositif 1 comprend une unité de validation 6 configurée pour valider une première valeur de la position POS de l'engin par une comparaison avec une deuxième valeur de ladite position.

Cette deuxième valeur est fournie par un système tiers, par exemple un système de navigation inertielle équipant un aéronef. Ledit système de navigation inertielle pourra également être utilisé pour déterminer la zone d'intérêt ROI évoquée plus haut.

Un aéronef ou un engin spatial peut comporter un dispositif 1 conforme à l'un quelconque des modes de réalisation décrits ci-dessus.

Le dispositif 1, tel que décrit ci-dessus, est apte à mettre en œuvre un procédé PR de localisation d'un engin, notamment un aéronef et/ou un engin spatial.

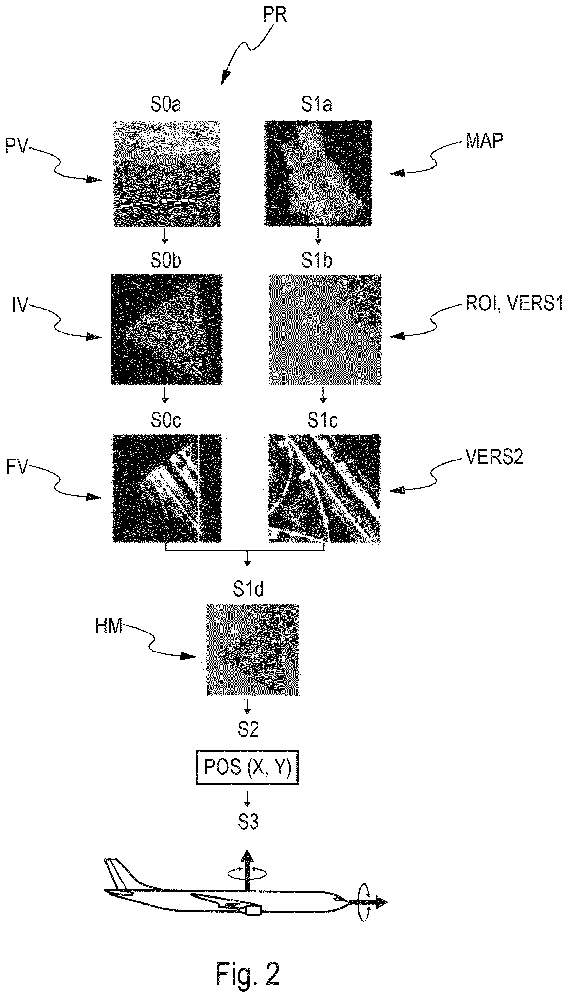

Comme représenté sur la figure 2, ce procédé PR exploite une cartographie MAP d'un terrain et comprend les étapes suivantes :
- une étape S0, dite d'acquisition, mise en œuvre par une unité d'acquisition 4, consistant à acquérir une image numérique IMG du terrain,
- une étape S1, dite de comparaison, mise en œuvre par une unité de traitement 2, consistant à déterminer une similitude entre ladite cartographie numérique MAP et ladite image numérique IMG,
- une étape S2, dite de détermination, mise en œuvre par l'unité de traitement 2, consistant à déterminer une position POS dudit engin à partir d'un résultat de ladite étape de comparaison.

En particulier, l'unité de traitement 2 et/ou l'unité d'acquisition 4 sont embarquées sur l'engin à localiser, conférant audit engin une plus grande autonomie pour sa localisation sur le terrain, et assurant au procédé PR de meilleures performances notamment en matière de vitesse d'exécution.

Par ailleurs, de façon avantageuse, l'étape de comparaison S1 comprend une première sous-étape S1a de téléchargement au moins partiel de la cartographie MAP au niveau de l'engin.

Selon le mode de réalisation représenté sur la figure 2, cette cartographie MAP illustre une vue aérienne d'un domaine aéroportuaire, et permet de distinguer notamment des aires de manœuvre, des pistes d'atterrissage et de décollage ainsi que des bâtiments présents sur ledit domaine aéroportuaire. Ladite cartographie MAP comporte en outre un système de coordonnées géographiques associées au domaine aéroportuaire. Il est ainsi possible grâce à cette cartographie MAP de déterminer, par exemple, une latitude et ou une longitude d'une zone donnée du domaine aéroportuaire.

L'étape de comparaison S1 comprend en outre une deuxième sous-étape S1b consistant à sélectionner une zone d'intérêt ROI sur ladite cartographie MAP. Ladite zone d'intérêt ROI correspond à un domaine restreint de localisation probable dudit engin sur ledit terrain.

Selon le mode de réalisation représenté, la zone d'intérêt ROI est un zoom effectué sur la cartographie MAP du domaine aéroportuaire, et en particulier sur une partie de ladite cartographie illustrant une aire de manœuvre dudit domaine aéroportuaire. Sur ce zoom, on peut distinguer notamment des marquages au sol présents sur l'aire de manœuvre ainsi qu'un contour d'une portion de sol recouverte d'herbe. Lesdits marquages et ledit contour sont de forme et/ou couleur particulières permettant de distinguer la zone d'intérêt ROI du reste du domaine aéroportuaire.

Enfin, l'étape de comparaison S1 comprend une troisième sous-étape S1c de traitement d'image consistant à augmenter un contraste d'un format initial VERS1 de ladite cartographie MAP pour obtenir un format final VERS2. C'est ce format final VERS2 qui forme la base de comparaison avec l'image IMG.

Selon le mode de réalisation représenté, le format final VERS2 de la cartographie MAP du domaine aéroportuaire met en évidence les marquages au sol et permet de mieux distinguer l'aire de manœuvre recouverte de macadam de la portion recouverte d'herbe.

La comparaison entre l'image IMG et la cartographie MAP du terrain peut se faire par identification d'au moins un premier pixel de ladite image IMG avec au moins un deuxième pixel de ladite cartographie MAP. Une telle identification peut être mise en œuvre lors d'une quatrième sous-étape S1d de superposition de ladite image IMG sur ladite cartographie MAP générant par exemple une carte de fréquentation HM (« Heat Map », en anglais).

Sur la base d'une telle carte de fréquentation HM corrélant les pixels de l'image IMG et les pixels de la cartographie MAP, l'étape de détermination S2 associe la position recherchée POS de l'engin au premier pixel de l'image IMG. Le deuxième pixel fournit alors des coordonnées (X, Y) correspondant à ladite position POS.

De façon avantageuse, l'étape d'acquisition S0 comprend une première sous-étape S0a de capture d'une version préliminaire PV de l'image IMG à l'aide d'une caméra intégrée dans l'unité d'acquisition 4.

Selon le mode de réalisation représenté, la version préliminaire PV de l'image IMG illustre une scène prise depuis un cockpit d'un aéronef, et notamment une partie du domaine aéroportuaire située à l'avant dudit aéronef. Sur cette version préliminaire PV, on observe une portion de sol recouverte de macadam et comprenant des marquages au sol, en particulier une ligne rectiligne et une ligne curviligne. On observe également une portion de sol recouverte d'herbe et adjacente à la portion recouverte de macadam.

En outre, l'étape d'acquisition S0 comprend une deuxième sous-étape S0b d'homographie consistant à transformer ladite version préliminaire PV en une version intermédiaire IV correspondant à une projection de ladite version préliminaire PV sur un plan de la cartographie MAP.

Selon le mode de réalisation représenté, la version intermédiaire IV correspond à une scène qui serait capturée par une caméra positionnée à l'aplomb de l'aéronef. Une telle caméra permettrait ainsi de voir le domaine aéroportuaire selon un angle de vue de la cartographie MAP dudit domaine aéroportuaire. Par ailleurs, cette version intermédiaire IV est traitée afin d'éliminer des éléments en arrière-plan présents sur la scène représentée dans la version préliminaire PV.

Enfin, l'étape d'acquisition S0 comprend une troisième sous-étape S0c de traitement d'image consistant à augmenter un contraste de ladite version intermédiaire IV pour obtenir une version finale FV de ladite image IMG. Dans le cas d'une image IMG prise par une caméra thermique, cette troisième sous-étape S0c peut comprendre une opération de conversion du contraste de la version intermédiaire IV afin de rendre celle-ci compatible avec la cartographie MAP.

Il est à noter que l'opération de conversion peut constituer une sous-étape à part entière de l'étape d'acquisition S0.

Selon le mode de réalisation représenté, la version finale FV de l'image IMG fait ressortir les marquages au sol et permet de mieux distinguer la zone recouverte de macadam de la zone recouverte d'herbe.

On constate que les représentations numériques du sol obtenues, d'une part, par les sous-étapes S1a-S1c de traitement de la cartographie MAP, et d'autre part, par les sous-étapes S0a-S0b de traitement de l'image IMG, sont d'aspect semblable. En particulier, on constate sur la cartographie MAP telle que traitée par les sous étapes S1a-S1c, et sur l'image IMG telle que traitée par les sous-étapes S0a-S0b, des marquages au sol ainsi que des contours ayant même configuration. Ces similitudes vont autoriser une comparaison efficace entre ladite image IMG et ladite cartographie MAP.

Il est à noter que l'opération d'augmentation du contraste du format initial VERS1 de la cartographie MAP peut être mise en œuvre par l'unité d'acquisition 4. Dans ce cas cette opération est considérée comme une sous-étape de l'étape d'acquisition S0.

Dans un autre mode de réalisation de l'invention, le procédé PR comprend en outre une étape de validation S3, mise en œuvre par une unité de validation 6, consistant à valider une première valeur de la position POS de l'engin par une comparaison avec une deuxième valeur de ladite position. En particulier, la deuxième valeur de la position POS est fournie par un système tiers, par exemple un système de navigation inertielle équipant un aéronef.

Le procédé selon l'invention est particulièrement adapté à la localisation d'un engin en déplacement. Les étapes S1, S2, S3 décrites ci-dessus s'enchainent alors de manière itérative pour chaque nouvelle position de l'engin.

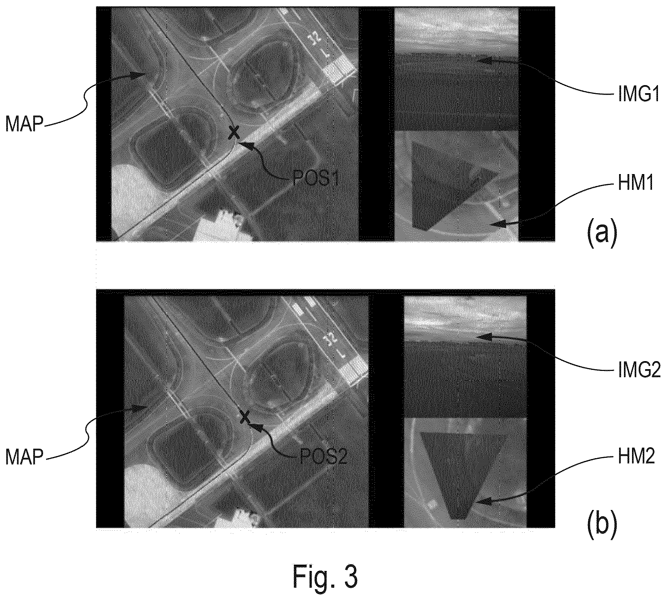

La figure 3 illustre ce processus itératif avec deux positions POS1, POS2 successives d'un aéronef à rechercher sur un domaine aéroportuaire. Sur cette figure, l'aéronef est représenté par une croix. La recherche de la position POS1 donne lieu à une première image IMG1 et une première carte de fréquentation HM1 (figure 3a). La recherche de la position POS2 conduit le procédé PR à générer une deuxième image IMG2 et une deuxième carte de fréquentation HM2 (figure 3b).

On constate que chaque image IMG1, IMG2 présente des éléments singuliers que l'on retrouve en différents endroits de la cartographie MAP. Ces éléments singuliers sont par exemple une courbure spécifique d'un marquage au sol, ou une courbure d'une ligne de démarcation entre une portion recouverte de macadam et une portion recouverte d'herbe, ou encore une configuration spécifique d'une portion de macadam.

## Revendications

1. Dispositif de localisation d'un engin, notamment un aéronef et/ou un engin spatial, ledit dispositif (1) comportant une base de données (8) comprenant une cartographie numérique (MAP) d'un terrain, une unité d'acquisition (4) configurée pour acquérir une image numérique (IMG) dudit terrain, ainsi qu'une unité de traitement (2) configurée pour recevoir de ladite unité d'acquisition (4) ladite image numérique (IMG) et déterminer une similitude entre ladite cartographie numérique (MAP) et ladite image numérique (IMG), de sorte à déduire une position (POS) dudit engin à partir d'un résultat de ladite similitude,
**caractérisé en ce que** l'unité d'acquisition (4) est configurée pour transformer par homographie une version préliminaire (PV) de ladite image (IMG) prise par une caméra de ladite unité d'acquisition (4) en une version intermédiaire (IV), ladite version intermédiaire correspondant à une projection de ladite version préliminaire (PV) sur un plan de ladite cartographie (MAP),
et l'unité d'acquisition (4) est configurée :
- pour augmenter et/ou inverser, par traitement d'image, un contraste de ladite version intermédiaire (IV) pour obtenir une version finale (FV) de ladite image (IMG),
- pour augmenter, par traitement d'image, un contraste d'un premier format (VERS1) de ladite cartographie (MAP) pour obtenir un format final (VERS2) de ladite cartographie (MAP), ladite version finale (FV) et ledit format final (VERS2) étant aptes à être utilisés pour déterminer ladite similitude..

2. Dispositif selon la revendication 1, dans lequel l'unité de traitement (2) et/ou l'unité d'acquisition (4) sont embarquées sur ledit engin.

3. Dispositif selon l'une quelconque des revendications 1 et 2, dans lequel l'unité de traitement (2) est configurée pour identifier au moins un premier pixel de ladite image (IMG) avec au moins un deuxième pixel de ladite cartographie (MAP), ledit premier pixel correspondant à ladite position (POS), ledit deuxième pixel délivrant des coordonnées ((X, Y)) correspondant à ladite position (POS).

4. Dispositif selon l'une quelconque des revendications 1 à 3, comprenant une unité de validation (6) configurée pour valider une première valeur de ladite position (POS) par une comparaison avec une deuxième valeur de ladite position fournie par un système de navigation inertielle.

5. Procédé de localisation d'un engin, notamment un aéronef et/ou un engin spatial, ledit procédé (PR) exploitant une base de données (8) comprenant une cartographie numérique (MAP) d'un terrain, ledit procédé (PR) comprenant les étapes suivantes :
- une étape (S0), dite d'acquisition, mise en œuvre par une unité d'acquisition (4), consistant à acquérir une image numérique (IMG) du terrain,
- une étape (S1), dite de comparaison, mise en œuvre par une unité de traitement (2), consistant à déterminer une similitude entre la cartographie numérique (MAP) du terrain et l'image numérique (IMG) dudit terrain,
- une étape (S2), dite de détermination, mise en œuvre par l'unité de traitement (2), consistant à déterminer une position (POS) dudit engin à partir d'un résultat de ladite étape de comparaison (S1),
**caractérisé en ce que** ladite étape d'acquisition (S0) comprend une sous-étape (S0b) d'homographie consistant à transformer une version préliminaire (PV) de ladite image (IMG) prise par une caméra de ladite unité d'acquisition (4) en une version intermédiaire (IV) de ladite image (IMG), ladite version intermédiaire (IV) correspondant à une projection de ladite version préliminaire (PV) sur un plan de ladite cartographie (MAP),
et ladite étape d'acquisition (S0) comprend une sous-étape (S0c) de traitement d'image consistant à :
- augmenter et/ou inverser un contraste de ladite version intermédiaire (IV) pour obtenir une version finale (FV) de ladite image (IMG),
- augmenter un contraste d'un premier format (VERS1) de ladite cartographie (MAP) pour obtenir un format final (VERS2) de ladite cartographie (MAP), ladite version finale (FV) et ledit format final (VERS2) étant aptes à être utilisés pour déterminer ladite similitude.

6. Procédé selon la revendication 5, dans lequel ladite unité de traitement (2) et/ou ladite unité d'acquisition (4) sont embarquées sur ledit engin.

7. Procédé selon l'une quelconque des revendications 5 et 6, dans lequel ladite étape (S1) de comparaison comprend une sous-étape (S1d) d'identification d'au moins un premier pixel de ladite image (IMG) avec au moins un deuxième pixel de ladite cartographie (MAP), ledit premier pixel correspondant à ladite position (POS), ledit deuxième pixel délivrant des coordonnées ((X, Y)) associées à ladite position (POS).

8. Procédé selon l'une quelconque des revendications 5 à 7, comprenant une étape (S3) de validation d'une première valeur de ladite position (POS) par une comparaison avec une deuxième valeur de ladite position, ladite deuxième valeur étant fournie par un système de navigation inertielle.

## Patentansprüche

1. Vorrichtung zur Lokalisierung einer Maschine, insbesondere eines Luftfahrzeugs und/oder eines Raumfahrzeugs, wobei die Vorrichtung (1) eine Datenbank (8) umfasst, die eine numerische Kartographie (MAP) eines Gebiets umfasst, eine Erfassungseinheit (4), die konfiguriert ist, um ein numerisches Bild (IMG) des Gebiets zu erfassen, sowie eine Verarbeitungseinheit (2), die konfiguriert ist, um das numerische Bild (IMG) von der Erfassungseinheit (4) zu empfangen und eine Ähnlichkeit zwischen der numerischen Kartographie (MAP) und dem numerischen Bild (IMG) zu bestimmen, um so eine Position (POS) der Maschine ausgehend von einem Ergebnis der Ähnlichkeit zu folgern,
**dadurch gekennzeichnet, dass**
die Erfassungseinheit (4) konfiguriert ist, um durch Homographie eine vorläufige Version (PV) des von einer Kamera der Erfassungseinheit (4) aufgenommenen Bildes (IMG) in eine Zwischenversion (IV) umzuwandeln, wobei die Zwischenversion einer Projektion der vorläufigen Version (PV) auf einer Ebene der Kartographie (MAP) entspricht,
und die Erfassungseinheit (4) konfiguriert ist:
- zum Erhöhen und/oder Umkehren, durch Bildverarbeitung, eines Kontrastes der Zwischenversion (IV), um eine endgültige Version (FV) des Bildes (IMG) zu erhalten,
- zum Erhöhen, durch Bildverarbeitung, eines Kontrastes eines ersten Formats (VERS1) der Kartographie (MAP), um ein endgültiges Format (VERS2) der Kartographie (MAP) zu erhalten, wobei die endgültige Version (FV) und das endgültige Format (VERS2) geeignet sind, zum Bestimmen der Ähnlichkeit verwendet zu werden.

2. Vorrichtung nach Anspruch 1, wobei die Verarbeitungseinheit (2) und/oder die Erfassungseinheit (4) in der Maschine eingebaut sind.

3. Vorrichtung nach einem der Ansprüche 1 und 2, wobei die Verarbeitungseinheit (2) konfiguriert ist, um mindestens ein erstes Pixel des Bildes (IMG) mit mindestens einem zweiten Pixel der Kartographie (MAP) zu identifizieren, wobei das erste Pixel der Position (POS) entspricht, wobei das zweite Pixel die Koordinaten ((X, Y)), die der Position (POS) entsprechen, liefert.

4. Vorrichtung nach einem der Ansprüche 1 bis 3, umfassend eine Validierungseinheit (6), die konfiguriert ist, um einen ersten Wert der Position (POS) durch einen Vergleich mit einem zweiten Wert der Position, der von einem Trägheitsnavigationssystem bereitgestellt wird, zu validieren.

5. Verfahren zur Lokalisierung einer Maschine, insbesondere eines Luftfahrzeugs und/oder eines Raumfahrzeugs, wobei das Verfahren (PR) eine Datenbank (8) nutzt, die eine numerische Kartographie (MAP) eines Gebiets umfasst, wobei das Verfahren (PR) die folgenden Schritte umfasst:
- einen als Erfassung bezeichneten Schritt (S0), der von einer Erfassungseinheit (4) durchgeführt wird und darin besteht, ein numerisches Bild (IMG) des Gebiets zu erhalten,
- einen als Vergleich bezeichneten Schritt (S1), der von einer Verarbeitungseinheit (2) durchgeführt wird und darin besteht, eine Ähnlichkeit zwischen der numerischen Kartographie (MAP) des Gebiets und dem numerischen Bild (IMG) des Gebiets zu erhalten,
- einen als Bestimmung bezeichneten Schritt (S2), der von der Verarbeitungseinheit (2) durchgeführt wird und darin besteht, eine Position (POS) der Maschine ausgehend von einem Ergebnis des Vergleichsschritts (S1) zu bestimmen,
**dadurch gekennzeichnet, dass**
der Erfassungsschritt (S0) einen Teilschritt (S0b) der Homographie umfasst, der darin besteht, eine vorläufige Version (PV) des von einer Kamera der Erfassungseinheit (4) aufgenommenen Bildes (IMG) in eine Zwischenversion (IV) des Bildes (IMG) umzuwandeln, wobei die Zwischenversion (IV) einer Projektion der vorläufigen Version (PV) auf einer Ebene der Kartographie (MAP) entspricht,
und der Erfassungsschritt (S0) einen Teilschritt (S0c) der Bildverarbeitung umfasst, der aus Folgendem besteht:
- Erhöhen und/oder Umkehren eines Kontrastes der Zwischenversion (IV), um eine endgültige Version (FV) des Bildes (IMG) zu erhalten,
- Erhöhen eines Kontrastes eines ersten Formats (VERS1) der Kartographie (MAP), um ein endgültiges Format (VERS2) der Kartographie (MAP) zu erhalten, wobei die endgültige Version (FV) und das endgültige Format (VERS2) geeignet sind, zum Bestimmen der Ähnlichkeit verwendet zu werden.

6. Verfahren nach Anspruch 5, wobei die Verarbeitungseinheit (2) und/oder die Erfassungseinheit (4) in der Maschine eingebaut sind.

7. Verfahren nach einem der Ansprüche 5 und 6, wobei der Vergleichsschritt (S1) einen Teilschritt (S1) der Identifizierung mindestens eines ersten Pixels des Bildes (IMG) mit mindestens einem zweiten Pixel der Kartographie (MAP) umfasst, wobei das erste Pixel der Position (POS) entspricht, wobei das zweite Pixel die Koordinaten ((X, Y)), die der Position (POS) zugeordnet sind, liefert.

8. Verfahren nach einem der Ansprüche 5 bis 7, umfassend einen Validierungsschritt (S3) eines ersten Werts der Position (POS) durch einen Vergleich mit einem zweiten Wert der Position, wobei der zweite Wert von einem Trägheitsnavigationssystem bereitgestellt wird.

## Claims

1. A device for locating a craft, notably an aircraft and/or a spacecraft, the device (1) comprising a database (8) comprising a digital mapping (MAP) of a terrain, an acquisition unit (4) configured to acquire a digital image (IMG) of said terrain, and a processing unit (2) configured to receive said digital image (IMG) from said acquisition unit (4) and determine a similarity between said digital mapping (MAP) and said digital image (IMG), so as to deduce a position (POS) of said craft from a result of said similarity,
**characterized in that** the acquisition unit (4) is configured to transform, by homography, a preliminary version (PV) of said image (IMG) taken by a camera of said acquisition unit (4) into an intermediate version (IV), said intermediate version corresponding to a projection of said preliminary version (PV) onto a plane of said mapping (MAP),
and the acquisition unit (4) is configured:
- to augment and/or invert, by image processing, a contrast of said intermediate version (IV) to obtain a final version (FV) of said image (IMG),
- to augment, by image processing, a contrast of a first format (VERS1) of said mapping (MAP) to obtain a final format (VERS2) of said mapping (MAP), said final version (FV) and said final format (VERS2) being able to be used to determine said similarity.

2. The device as claimed in claim 1, wherein the processing unit (2) and/or the acquisition unit (4) are embedded on said craft.

3. The device as claimed in either one of claims 1 and 2, wherein the processing unit (2) is configured to identify at least one first pixel of said image (IMG) with at least one second pixel of said mapping (MAP), said first pixel corresponding to said position (POS), said second pixel delivering coordinates ((X, Y)) corresponding to said position (POS).

4. The device as claimed in any one of claims 1 to 3, comprising a validation unit (6) configured to validate a first value of said position (POS) by a comparison with a second value of said position supplied by an inertial navigation system.

5. A method for locating a craft, notably an aircraft and/or a spacecraft, said method (PR) using a database (8) comprising a digital mapping (MAP) of a terrain, said method (PR) comprising the following steps:
- a step (S0), called acquisition step, implemented by an acquisition unit (4), consisting in acquiring a digital image (IMG) of the terrain,
- a step (S1), called comparison step, implemented by a processing unit (2), consisting in determining a similarity between the digital mapping (MAP) of the terrain and the digital image (IMG) of said terrain,
- a step (S2), called determination step, implemented by the processing unit (2), consisting in determining a position (POS) of said craft from a result of said comparison step (S1), **characterized in that** said acquisition step (S0) comprises a homography sub-step (S0b) consisting in transforming a preliminary version (PV) of said image (IMG) taken by a camera of said acquisition unit (4) into an intermediate version (IV) of said image (IMG), said intermediate version (IV) corresponding to a projection of said preliminary version (PV) onto a plane of said mapping (MAP),
and said acquisition step (S0) comprises an image processing sub-step (S0c) consisting in:
- augmenting and/or inverting a contrast of said intermediate version (IV) to obtain a final version (FV) of said image (IMG),
- augmenting a contrast of a first format (VERS1) of said mapping (MAP) to obtain a final format (VERS2) of said mapping (MAP), said final version (FV) and said final format (VERS2) being able to be used to determine said similarity.

6. The method as claimed in claim 5, wherein said processing unit (2) and/or said acquisition unit (4) are embedded on said craft.

7. The method as claimed in any one of claims 5 and 6, wherein said comparison step (S1) comprises a sub-step (S1d) of identification of at least one first pixel of said image (IMG) with at least one second pixel of said mapping (MAP), said first pixel corresponding to said position (POS), said second pixel delivering coordinates ((X, Y)) associated with said position (POS).

8. The method as claimed in any one of claims 5 to 7, comprising a step (S3) of validation of a first value of said position (POS) by a comparison with a second value of said position, said second value being supplied by an inertial navigation system.
